# EUROPÄISCHE PATENTSCHRIFT

(11) **EP 2 236 261 B1**
(45) Veröffentlichungstag und Bekanntmachung des Hinweises auf die Patenterteilung: **14.01.2015**
(21) Anmeldenummer: 10003374.5
(22) Anmeldetag: 29.03.2010
(51) Int. Cl.: B29B 7/42, B29B 7/60, B29B 7/90, B01F 13/10, B01F 15/04, B29B 7/16

(54) **Verfahren und Anlage zur taktweise Herstellung und kontinuierlichen Bereistellung eines Harz-Füllstoffgemisches im Zuge der Produktion von Kunststoff-Formteilen**
Method and assembly for incremental production and continuous provision of a resin filler mixture in the process of producing plastic moulded parts
Procédé et installation de fabrication cadencée et de préparation continue d'un mélange de matériau de remplissage en résine lors de la production de pièces de formage en matière synthétique

(30) Priorität: 29.03.2009 DE 102009014363
(43) Veröffentlichungstag der Anmeldung: 06.10.2010
(73) Patentinhaber: Dieffenbacher GmbH Maschinen- und Anlagenbau, 75031 Eppingen (DE)
(72) Erfinder: Graf, Matthias, 75015 Bretten (DE); Keitel, Jochen, D-74930 Ittlingen (DE)

(56) Entgegenhaltungen:
- EP-A2- 0 254 668
- EP-A2- 0 309 410
- DE-A1- 4 023 100
- DE-A1- 19 939 042
- DE-A1-102005 042 383
- DE-A1-102006 062 622
- JP-A- 5 042 531
- US-A- 5 198 171

## Beschreibung

Die Erfindung betrifft ein Verfahren und eine Anlage zur taktweisen Herstellung und kontinuierlichen Bereitstellung eines Harz-Füllstoffgemisches im Zuge der Produktion von Kunststoff-Formteilen mit oder ohne Fasern zur Verstärkung, wobei zumindest Anteile des Harzes als eine Vormischung vorgemischt und zusammen mit einem Füllstoff und mit oder ohne Fasern in zumindest einem Extruder zu einem Harz-Füllstoffgemisch homogenisiert werden.

Wegen ihren guten mechanischen Eigenschaften und des günstigen Preises sind Kunststoffformteile und besonders aus faserverstärkten Duroplasten (SMC) hergestellte Formteile die am meisten eingesetzten duroplastischen Faserverbundkunststoffe in der Kunststoff verarbeitenden Industrie. Bisher wird zur Produktion von SMC-Teilen zuerst eine Art Rohstoff (Halbzeug), bestehend aus einer Harzmasse (Harzansatz) mit eingelagerten Füllstoffen und geschnittenen oder gebrochenen (oder endlich langen) Glasfasern, hergestellt. Das Harz-Füllstoffgemisch (Harzansatz mit Füllstoffen) wird auf dünne Kunststofffolien (Trägerfolien) aufgetragen, in deren Zwischenraum die gebrochenen, geschnittenen oder endlich langen Fasern abgelegt werden. Nach einer Walkstrecke, die einer verbesserten Benetzung der Fasern dient, durchläuft das Halbzeug einen Reifeprozess, bevor das es zum Bauteil verarbeitet werden kann. Der übliche Reifeprozess liegt bei drei bis fünf Tagen und dient unter anderem dem Eindicken der Mischung. Der Harzansatz selbst besteht in der Regel aus Harzen, Thermoplastlösungen, Additiven zur Verbesserung der Materialeigenschaften, integrierten Trennmitteln, Inhibitoren wahlweise weiteren Zuschlagstoffen für die Modifizierung bestimmter Eigenschaften und einem Härter.

Der Harzansatz wird zu einer gut dispergierten Flüssigkeit in einem vorgegebenen Temperaturbereich gerührt, mit mineralischen Füllstoffen versehen, und an der Harzmattenanlage kurz vor dem Auftrag auf die Folien noch mit einem Eindickmittel, pulverförmig oder flüssig, ergänzt. Anschließend wird das Harz-Füllstoffgemisch über Rakel auf die untere und obere Trägerfolie aufgerakelt und in der Dicke eingestellt. Auf die Harz-Füllstoffgemischschicht der unteren Trägerfolie kann dann das Schnittglas, Endlos-Rovings zum Beispiel mittels Schneidewerken aufdosiert werden. Danach legt sich die obere Trägerfolie, die ebenfalls mit dem Harz-Füllstoffgemisch versehen ist, auf den Schnittfaserbelag und die untere Schicht. Durch einen anschließenden Walkprozess werden die Fasern mit dem Harz-Füllstoffgemisch vermischt/getränkt und als SMC-Matte anschließend auf eine Rolle gewickelt oder als flächiges Halbzeug für den Reifeprozess zwischengelagert. Durch den Reifeprozess dickt das Harz-Füllstoffgemisch normalerweise so stark ein, dass die Trägerfolien rückstandsfrei abgezogen werden können. Aus dem flächigen Halbzeug oder den Rollen werden nach oder während der Reifezeit, abgestimmt auf das jeweils herzustellende Formteil, Zuschnittmatten herausgeschnitten und in einer Formpresse einfach oder als vorgeschichtetes Paket abgelegt und verpresst. Der Nachteil dieses Verfahrens ist, dass das SMC-Halbzeug Chargenweise hergestellt wird und erst nach einer mehrstündigen oder mehrtägigen Reifezeit verarbeitet werden kann, wodurch Materialinkonsistenzen und hohe Lager- und Verwaltungskosten in die Gesamtherstellungskosten eines Halbzeuges einfließen.

Von Nachteil ist weiter, dass sich die gelagerten Matten oder der auf eine Rolle aufgewickelte Harzansatz während des Reifeprozesses verformen können. Liegt die Rolle auf dem Boden, gibt es Pressungen auf die darunter liegenden SMC-Bahnen und damit ein Verdrängen des Materials zur Seite. Werden die Rollen über eine Achse aufgehängt, ist der negative Effekt während der Reifelagerung umgekehrt. Das Material fließt nach in Richtung der Schwerkraft und die Bahnschichten im unteren Bereich der Rolle können höhere Flächengewichte aufweisen, als die oberen Bahnschichten. Diese zwangsläufig unterschiedlichen Flächengewichte zwingen den Produzenten dazu, die Matten vor der Verpressung nicht nur der Länge nach abzuschneiden sondern zusätzlich zu wiegen, um je Fertigungsteil die gleiche Füllung und damit Teiledicke zu erhalten. Wären die Flächengewichte der Bahnen konstant, könnten die benötigten SMC-Bahnabschnitte mit einer Längenmessuhr automatisch geschnitten werden, was die Herstellungskosten erheblich reduzieren und die Qualität der Formteile verbessern würde. Diese im Dickenquerschnitt unterschiedliche Zuschnittmatten-Zusammensetzung ist auch der Grund, warum die Herstellung von SMC-Formteilen bisher unzureichend automatisierbar war.

Als weiterer Nachteil der bisherigen SMC-Herstellung sind die nicht wieder verwendbaren Trägerfolien zu sehen, die zusätzlich als Kostenfaktor in den Herstellungsprozess eingehen.

Mit DE 102 33 300 A1 ist ein Verfahren und eine Anlage bekannt geworden, die versucht den Nachteil der Lagerhaltung und der Folienverwendung zu vermindern, in dem nach der Herstellungszone für den Harzansatz ein gekapselter Eindick-Durchlaufspeicher angeordnet ist. Dabei wird der Harzansatz durchgehend zwischen zwei endlos umlaufenden Bändern geführt und während des Verweilens im Eindick-Durchlaufspeicher vollständig gereift. Das Verfahren und die Anlage sind grundsätzlich verwendungsfähig.

Nachteilig ist aber bei obigem Stand der Technik, dass immer noch eine zusätzliche Lager- bzw. Reifevorrichtung notwendig ist, die Investitions-, Betriebs- und natürlich Wartungskosten mit sich bringt, die wiederum die Gesamtherstellungskosten erhöhen. Auch lassen sich nicht alle Varianten von Harzmattenansätzen auf obiger Anlage fahren, da gerade die Zumischung und Vermischung aller Additive und Reaktionsmittel in das verwendete Harz die Industrie immer wieder vor Probleme stellt, das aufwendige Lösungen und Verfahrenstechniken erfordert. Teilweise werden Additive in Größenverhältnissen von 1:1000 (1 Milliliter auf 1 Liter) oder weniger zugemischt. Das Verhältnis wird sogar noch extremer, wenn Additive nach der Zumischung der Füllstoffe zum Harz zugegeben werden müssen, wobei hier auch noch das Problem einer absolut gleichmäßigen Durchmischung im Raum steht.

Im Prinzip lässt sich festhalten, dass nicht ein allgemeines Harz für die Produktion von SMC-Bauteilen verwendet wird, sondern dass mittlerweile die Harzproduktion jeweils auf das zu produzierende Bauteil abgestimmt werden muss, da je nach Bauteil andere Anforderungen durch den Besteller gefordert werden können. Als extrem gegensätzliches Beispiel finden sich hier Kunststoff-Stoßfänger an einem Kfz und ein zu kaschierendes Innenraumverkleidungsteil, beispielsweise das Armaturenbrett, in einem Kfz. Dementsprechend wäre es von Vorteil, wenn der ausführende Produzent direkt vor der Verpressung die Materialart des Kunststoffes mit einfachen Mitteln justieren und herstellen könnte und nicht umständlich Tage oder Wochen vorher das entsprechende Material fertigen bzw. bestellen lassen muss. Zudem besteht die Möglichkeit Fehler in den Rezepturen bei der gleich anschließenden Bauteilfertigung zu erkennen und die Anlagentechnik nachzujustieren, wohingegen bei Halbzeug basierten gereiften Systemen, ganze Chargen als Ausschuss vorliegen.

Mit DE 10 2006 062 622 A1 ist ein Verfahren und eine Vorrichtung zur Herstellung einer Harzmischung im Zuge der Produktion von Kunststoff- Formteilen, insbesondere von faserverstärkten Kunststoff-Formteilen (SMC), im unterbrechungsfreien Direktverfahren, bekannt geworden, wobei zur Herstellung der Harzmischung die einzelnen Anteile einer fluiden Hauptkomponente zudosiert und vermischt werden. Hierzu werden zwei Mischkreise verwirklicht, die jeweils über einen dynamischen Mischbereich und nachfolgende statische Mischer verfügen. Dabei wird in einem umlaufenden Kreislaufsystem im ersten Mischkreis in Reihe ein dynamischer Mischbereich, bestehend aus einer oder mehreren Schlauchpumpen mit Einspritzdüsen in das Kreislaufsystem, eine Pumpe, ein statischer Mischer und einen Überlauf für die Vormischung, bestehend aus einem Anschluss zum zweiten Mischkreis, angeordnet sind, wobei im zweiten Mischkreis in Reihe ein dynamischer Mischbereich, bestehend aus einer oder mehrerer Schlauchpumpen und/oder Zahnradpumpen, eine Pumpe, ein statischer Mischer und einem Überlauf, bestehend aus einem Anschluss zur Überleitung der Harzmischung zum Extruder, angeordnet sind, wobei der Extruder eine Zufuhr für Füllstoffe und Verstärkungsfasern aufweist. Die hier vorgeschlagene Lösung hat sich grundsätzlich bewährt, bietet aber noch Möglichkeiten zur Verbesserung.

Grundsätzlich weisen alle Verfahren und Vorrichtungen bei der Mischung von Rezeptur-Komponenten, besonders bei der SMC-Herstellung, mittels Pumpen den Nachteil auf, dass hochviskose Flüssigkeiten und auch die Kleinstmengendosierung nicht den Vorgaben entsprechend umgesetzt werden können. Gerade entscheidende Dosierunterschiede können unterschiedliche Eigenschaften bei der Weiterverarbeitung im Extruder oder in einer Presse verursachen oder die Haltbarkeit bis zur Weiterverarbeitung verkürzen und somit für unbrauchbares Material sorgen. Weiterhin ist zumindest ein Anteil, wenn nicht sogar mehrere Anteile, der zu dosierenden Flüssigkeiten bei Erwärmung brand- oder explosionsgefährdet und benötigt einen hohen sicherheitstechnischen und Unfall verhütenden Aufwand. Daneben finden sich auch flüchtige Anteile, die ebenfalls ungünstige Handhabbarkeitsmerkmale aufweisen.

Bei den umlaufenden Kreislaufmischern, besteht ferner das Problem, dass systembedingt, stetig Komponenten zugeführt und stetig Harzgemisch abgeführt werden und sich im Mischbereich reaktive Bestandteile zu lange verweilen können und Ihre Reaktionsfähigkeit verlieren bzw. zu Teilvernetzungserscheinungen führen können. Besonders nachteilig wirkt sich dieser Effekt bei der Umstellung der Rezeptur aus, wodurch er sich nicht für eine online Umstellung der Rezeptur eignet. Ferner haben sich Anlagenkomponenten wie Zahnradpumpen, Überlaufventile und Durchflussmesssystem als sehr störanfällig und wartungsintensiv beim Umgang mit hochviskosen und reaktiven Harzen erwiesen.

Die EP 0 309 410 A2 beschreibt ein Verfahren zur Herstellung einer vorzugsweise bei Raumtemperaturfesten, heißhärtbaren, bei Aushärten Duroplaste bildenden Mischung, z.B. eines Reaktiv-Schmelzklebers, umfasst das Zubereiten einer ersten Vormischung durch direktes Einführen von schmelzbarem Festharz, und mindestens einer weiteren Komponente von denen mindestens eine flüssig ist, in eine Mischzone, in der die Komponenten geschmolzen werden; das Zubereiten einer zweiten Vormischung durch direktes Vermischen von hitzeaktivierbarem Härter und mindestens einer weiteren Komponente; Einleiten der Schmelze in eine Extrudierzone, Eingeben der pulverförmigen Vormischung in die Extrudierzone stromab der Eingabe der Schmelze, welche eine Temperatur unterhalb der Härtungstemperatur aufweist, und in solcher Menge, dass der Gehalt an Vormischung im Endprodukt von 10 bis 50, vorzugsweise 20 bis 35 Gew. % beträgt, wobei Lufteinschlüsse in die Schmelze und in das extrudierte Gut vermieden werden. Eine Anlage zur Durchführung des obigen Verfahrens mit einer besonderen Extrudereinlasskammer für die Schmelze ist gleichfalls beschrieben.

Die JP 5 042 531 A offenbart einen Vorschlag zur kontinuierlichen Bereitstellung von einer Harzmischung durch abwechselnde Produktion und Vermischung in zwei Mischbehältern. Dabei wird das Gewicht des Behälters durch eine Waage gewogen um die Dosierung der flüssigen Komponenten richtig einzustellen um sie mit einem Rührwerk zu vermischen.

Schließlich sei noch auf die DE 10 2005 042 383 A1 hingewiesen, welche eine Vorrichtung zum Mischen von pumpfähigen, insbesondere pastösen und/oder flüssigen Komponenten offenbart, umfassend einen Mischbehälter, mit Einbringmitteln zum Einbringen der Komponenten in den Mischbehälter, und mit Mischmitteln zum Mischen der Komponenten in dem Mischbehälter. Um Qualitätsschwankungen zu vermeiden, die bei Komponenten mit stark voneinander abweichenden Viskositäten oder Dichten entstehen, wobei die Komponente hoher Viskosität oder hoher Dichte unmittelbar auf den Boden des Mischbehälters gelangen und von dort unvermischt weitergeleitet werden kann, werden Rückspülmittel vorgesehen für mindestens eine Komponente zum Aufwirbeln einer auf den Boden des Mischbehälters gesunkenen Komponente.

Der Erfindung liegt die Aufgabe zugrunde, ein Verfahren und eine Anlage zu schaffen, mit denen es möglich ist, zuverlässig und im Dauerbetrieb eine taktweise Herstellung und kontinuierliche Bereitstellung eines Harz-Füllstoffgemisches zu gewährleisten, wobei ein optimales und präzises Mischungsverhältnis der einzelnen Bestandteile eines Harz-Füllstoffgemisches (meist bestehend aus einer Harzmischung und Füllstoffen) sichergestellt wird, in dem die Komponenten, besonders anteilige Kleinstkomponenten oder hochviskose Komponenten, fein und gleichmäßig dispergiert sind. Im besonderen soll die Harzmischung optimiert für die Zufuhr von Kleinstkomponenten und zuverlässig in einer taktweisen Herstellung und kontinuierlichen Bereitstellung für den Dauerbetrieb herstellbar sein.

Die Lösung für das Verfahren beinhaltet folgende Verfahrensschritte:
a.) die einzelnen Anteile einer festgelegten Vormischung werden unter einem Vordruck über Dosierventile aus verschiedenen Vorratsbehältern gravimetrisch geregelt in einen Mischtopf zur Erzeugung einer Vormischung eindosiert,
b.) wobei während der gravimetrisch geregelten Eindosierung der einzelnen Anteile eine am Mischtopf angebrachte Wiegevorrichtung und eine damit verbundene Steuer- oder Regelvorrichtung die Menge jedes einzelnen Anteiles der Vormischung einstellt und/oder kontrolliert,
c.) wobei anschließend oder gleichzeitig die einzelnen eingebrachten Anteile im Mischtopf mit einer Rührvorrichtung zu einer Vormischung vermischt werden,
d.) und diese Vormischung nach ausreichender Vermischung taktweise an einen Dosierbehälter übergeben wird,
e.) und der Dosierbehälter während der vorhergehenden Verfahrensschritte über eine am Dosierbehälter angebrachte zweite Wiegevorrichtung und eine zugehörige zweite Steuer- oder Regelvorrichtung und eine Förderpumpe die Vormischung kontinuierlich dosiert zumindest einem Extruder zur Erstellung eines Harz-Füllstoffgemisches zuführt,
f.) wobei während der kontinuierlichen Übergabe der Vormischung an den Extruder im Mischtopf eine weitere Vormischung hergestellt wird,
g.) wobei die kontinuierliche Förderung aus dem Dosierbehälter in den Extruder gravimetrisch oder volumetrisch gesteuert oder geregelt erfolgt,
h.) und wobei während der taktweisen Überleitung der Vormischung vom Mischtopf in den Dosierbehälter die kontinuierliche Entnahme der Vormischung aus dem Dosierbehälter mittels der Förderpumpe für diesen Zeitraum auf eine volumetrische Dosierung umgestellt wird.

Die Lösung für eine Anlage besteht darin,
a.) dass zu einer gravimetrisch geregelten Eindosierung der unter einem Vordruck stehenden einzelnen Anteile einer festgelegten Vormischung in einen Mischtopf zur Erzeugung einer Vormischung aus verschiedenen Vorratsbehältern Dosierventile angeordnet sind,
b.) dass zur gravimetrisch geregelten Eindosierung der einzelnen Anteile eine Wiegevorrichtung für den Mischtopf und eine damit verbundene Steuer- oder Regelvorrichtung zur Einstellung und/oder Kontrolle der Menge jedes einzelnen Anteiles über die Dosierventile angeordnet ist,
c.) dass zur Vermischung der einzelnen eingebrachten Anteile im Mischtopf eine Rührvorrichtung angebracht ist,
d.) dass zur taktweisen und direkten Übergabe der Vormischung in einen Dosierbehälter ein Dosierventil am Mischtopf angeordnet ist,
e.) und dass zur Steuerung oder Regelung der kontinuierlichen Abgabe der Vormischung aus dem Dosierbehälter für zumindest einen Extruder zur Erstellung eines Harz-Füllstoffgemisches eine Förderpumpe, eine zweite Wiegevorrichtung und eine zugehörige zweite Steuer- oder Regelvorrichtung angeordnet ist;
   **wobei** die Anlage darüber hinaus dergestalt eingerichtet ist,
f.) dass während der kontinuierlichen Übergabe der Vormischung an den Extruder im Mischtopf eine weitere Vormischung hergestellt wird,
g.) dass die kontinuierliche Förderung aus dem Dosierbehälter in den Extruder gravimetrisch oder volumetrisch gesteuert oder geregelt erfolgt,
h.) und dass während der taktweisen Überleitung der Vormischung vom Mischtopf in den Dosierbehälter die kontinuierliche Entnahme der Vormischung aus dem Dosierbehälter mittels der Förderpumpe für diesen Zeitraum auf eine volumetrische Dosierung umgestellt wird.

Die Anlage zeichnet sich im Übrigen dadurch aus, dass diese auch ohne Durchführung des Verfahrens zur Herstellung von gefüllten, additivierten und/oder verstärkten, vorzugsweise faserverstärkten, Kunststoffen, alleinig für sich mit den nachfolgenden Vorteilen gegenüber dem Stand der Technik betrieben werden kann. Mit den Maßnahmen des erfindungsgemäßen Verfahren ist es möglich ein Harz-Füllstoffgemisch (bestehend aus einer Harzmischung und Füllstoffen) herzustellen, der zum Beispiel bei der Herstellung von faserverstärkten Formteilen ohne Zwischenlagerung für den Reifeprozess im kontinuierlichen Direktverfahren Verwendung finden kann. Hierzu wird in einem neuartigen Mischsystem zunächst aus verschiedenen Harzkomponenten, Additiven und Härtern eine Vormischung erzeugt, die anschließend einem Extruder zudosiert werden, in dem unabhängig hiervon die Eindickmittel und Füllstoffe zugeführt werden und dort mit den Langfasern vermischt und zu einem langfaserverstärkten und gefüllten Harzansatz compoundiert; über eine formgebende Düse ausgetragen und direkt in einer Presse zu Formteilen verpresst werden. Die Zusammensetzung und das Mischungsverhältnis der einzelnen Bestandteile werden dabei so genau eingestellt, dass bei Wahl eines Herstellungsprozesses im Direktverfahren (ohne Lagerhaltung) keine Reifezeit abgewartet werden muss, sondern der Harzansatz nach seiner Produktion direkt verpresst wird. Damit kann SMC direkt vor Ort aus den notwendigen Materialien hergestellt werden und muss nicht mehr an meist entfernten Produktionsstandorten zentral produziert, dort gelagert und beim Reifezeitpunkt pünktlich beim Kunden platziert werden, damit dieser die gereiften Harzmatten verwenden kann.

Der Produzent von Formteilen ist nun in der Lage Kunststoff-Formteile, speziell SMC-Formteile, direkt an den für die Verarbeitung notwendigen Pressen zu produzieren, wobei auch noch, je nach Anwendungsfall, unterschiedliche Mischungen hergestellt werden können. Dementsprechend entfallen die Probleme bei einer lagergestützten Materialversorgung im Bereich der Über- und Unterversorgung an Lagerware vollständig.

Als Vorteil und Ergebnis aller vorgeschlagenen Verfahrensschritte und Merkmale der Anlage lässt sich zusammenfassend feststellen,
- dass eine Steigerung der Anlagenflexibilität durch einen schnellen und vor allem unkomplizierten Rezepturwechsel möglich ist,
- dass eine optimale und gezielte Dosierung selbst von Kleinstkomponenten durch mehrfache Regelung und Überwachung möglich ist,
- dass durch den Einsatz von verschleißarmen Bauteilen und Ventiltechnik, und insbesondere durch den Verzicht auf Sensorik, die in direkter Berührung mit dem Harzgemisch bzw. den einzelnen Komponenten steht, die Anlagentechnik und -verfügbarkeit verbessert und Ausfallzeiten reduziert werden können,
- dass die Gesamtanlage auch zur Dosierung von entzündlichen bis hin zu explosionsgefährdeten Flüssigkeiten geeignet ist,
- dass nur ein kleiner Bereich (zumindest Mischtopf und Dosierbehälter) explosionssicher gekapselt werden muss,
- dass problemlos styrolhaltige Komponenten verarbeitet werden können,
- dass bis auf den Extrudereintrag und der Feststoffzudosierung auf anfällige und ggf. zu ungenaue Pumpen verzichtet werden kann,
- dass hohe Produktionssicherheit hinsichtlich der Bereitstellung der notwendigen Quantität und Qualität gewährleistet ist,
- dass das Verfahren und die Anlage flexibel verwendbar sind und bei einer Vielzahl von verschiedenen Mischungsverhältnissen ein optimales Ergebnis zu liefern,
- dass die Umstellung auf andere Varianten oder Rezepte der Mischungen online ohne nennenswerten Zeit- oder Materialverlust bei gleichzeitiger direkter Einsetzbarkeit vor Ort (bei einer Formpresse) möglich ist,
- dass die aus der dem Harz-Füllstoffgemisch hergestellten Extrudate mit der richtigen Plastizität und in gleich bleibender Qualität in einem SMC-Direktverfahren der Weiterverarbeitung zu faserverstärkten duroplastischen Formteilen zugeführt oder im Rahmen eines Halbzeugdirektverfahrens verwendet werden können.

Der Mischtopf und/oder der Dosierbehälter kann mit einer hochpräzisen Wiegevorrichtung ausgestattet werden. Dadurch, dass im statischen Zustand die Anteile eingewogen werden ist die Dosiergenauigkeit sehr hoch. Die hohe Dosiergenauigkeit wird dadurch gefördert, dass die Einzelkomponenten unter einem Vordruck an den Ventilen anstehen, der vorzugsweise durch die Gewichtskraft bewirkt wird. Je nach Anordnung, Beschaffenheit der Komponenten oder der bei einer großindustriellen Anwendung kann es sinnvoll sein zusätzliche Förderpumpen in den Zuleitungen den Vordruck zu erhöhen, aufzubringen oder genau einzusteuern. Insgesamt hilft die Trennung von kontinuierlicher Eindosierung der Harzmischung und zusätzlicher Beimengungen in einen Extruder von einer taktweisen Herstellung einer Harzmischung mit gleichzeitigem Einwiegen und Mischen bei der hochgenauen Herstellung der Harzmischung, respektive dem darauf anschließend herstellbaren Harz-Füllstoffgemisch. Trotz kurzzeitiger Störungen an den Dosierventilen, dem Rührwerk oder bei einem Leerlauf der Vorratsbehälter, kann die Gesamtanlage zunächst weiter betrieben werden, solange noch ein Rest der Vormischung im Dosierbehälter vorhanden ist. Selbst eine Reinigung oder Wechsel des Mischbehälters bei fortlaufender oder besonders bei einer geänderten Produktion ist möglich.

Bevorzugt wird die Dosierung in den Mischbehälter über Dosierventile für unterschiedliche Nenngrößen und unterschiedliche Viskositäten durchgeführt. In vorteilhafter Weise werden vorzugsweise Standardteile eingesetzt, die bei Tausch oder Umbau der Anlage standardisierte Schnittstellen für die Steuerungs- oder Regelungsvorrichtungen aufweisen. Die Kleinstkomponenten werden vorzugsweise mit feinfülligen Dosierventilen kleiner Nenngröße zudosiert. Die Ventile sind vorzugsweise mehrstufig oder stufenlos verstellbar ausgeführt. Die Steuerungs- oder Regelungsvorrichtung überwacht die Zudosierung über das Signal der Wiegevorrichtung. Hierbei wird vorzugsweise kurz vor Erreichen der Sollmenge, die Durchflussmenge des Dosierventils gedrosselt, um eine möglichst exakte Erfüllung des Sollwertes zu erreichen.

Weitere vorteilhafte Maßnahmen und Ausgestaltungen des Gegenstandes der Erfindung zur taktweisen Herstellung und kontinuierlichen Bereitstellung eines Harz-Füllstoffgemischs im Zuge der Produktion von Kunststoff- Formteilen mit oder ohne Fasern zur Verstärkung gehen aus den Unteransprüchen und der folgenden Beschreibung der Zeichnung hervor.

Es zeigen:
- Figur 1: eine schematische Darstellung einer Anlage zur taktweisen Herstellung und kontinuierlichen Bereitstellung von, vorzugsweise faserverstärkten, Harz-Füllstoffgemischen mit einer Revolverdrehvorrichtung für die Vorratsbehälter und einer alternierenden Einleitung aus den Vorratsbehältern,
- Figur 2: eine schematische Darstellung einer Anlage zur taktweisen Herstellung und kontinuierlichen Bereitstellung von, vorzugsweise faserverstärkten, Harz-Füllstoffgemischen mit einem Dosierständer und in Teilen gleichzeitiger Einleitung aus den Vorratsbehältern,
- Figur 3: eine schematische Darstellung einer Anlage zur taktweisen Herstellung und kontinuierlichen Bereitstellung von, vorzugsweise faserverstärkten, Harz-Füllstoffgemischen mit zusätzlichen externen Vorratsbehältern und entsprechend notwendigen Zuführungsrohren und optionalen Pumpen beispielsweise bei einer großindustriellen Produktion und
- Figur 4: bis 6, eine vergrößerte Darstellung des Dosierbehälters als Schnittstelle zwischen dem taktweise und dem kontinuierlich arbeitenden Verfahren mit unterschiedlichen Varianten zur geordneten Einleitung einer weiteren Vormischung.

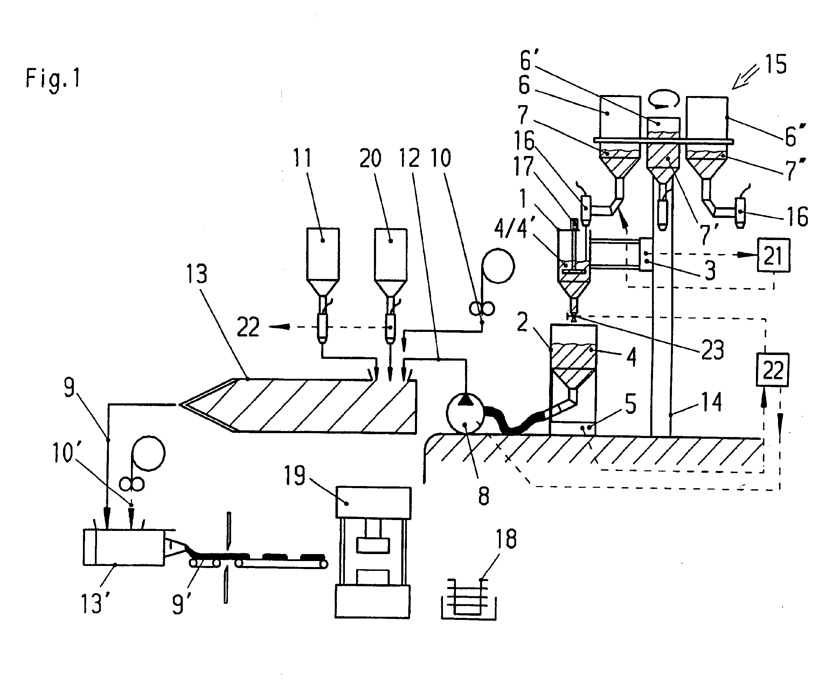

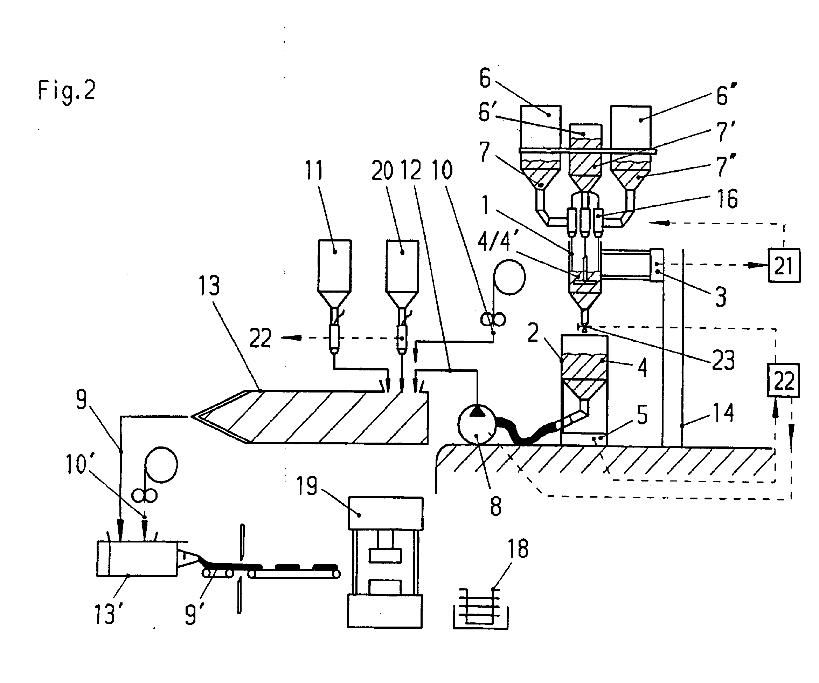

In den Figuren 1 bis 3 lässt sich die Anlage zur taktweisen Herstellung und kontinuierlichen Bereitstellung von, vorzugsweise faserverstärkten, Harz-Füllstoffgemischen schematisch auf drei Bereiche aufteilen:
- eine Revolverdrehvorrichtung 15 auf einem Ständer 14 (Figur 1), einen Dosierständer mit dosierbaren Einzelkomponentenzuführungen (Figur 2) oder eine zentralisierte Lagerung der Vorratsbehälter 6, 6', 6" ..., vorzugsweise oberhalb des Mischtopf 1, respektive der Dosierventile 16, zur Herstellung einer Vormischung 4, 4',
- einem unter dem Mischtopf 1 angeordnetem Dosierbehälter 2 mit einer Förderpumpe 8 für den kontinuierlichen Austrag der Vormischung 4 in einen Extruder 13, 13' und
- einem Fertigungsbereich mit zumindest einem Extruder 13, 13' und einer schematischen und hier beispielhaften Darstellung eines möglichen SMC-Direktverfahrens zur Herstellung von Kunststoff-Formteilen 18 mit einer Presse 19.

Der Verfahrensablauf gestaltet sich nach den Figuren 1 bis 3 wie folgt.

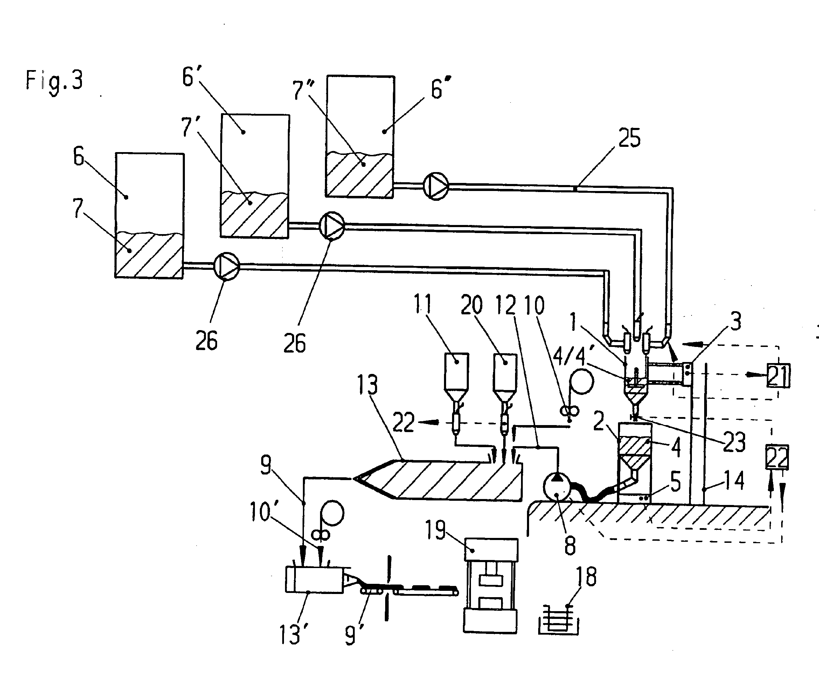

In einen anfänglich leeren Mischtopf 1 zur Erzeugung einer Vormischung 4, 4' werden aus Vorratsbehältern 6, 6', 6"...6ⁿ unterschiedliche Anteile 7, 7', 7"...7ⁿ (beide in beliebiger respektive notwendiger Anzahl) gesteuert über Dosierventile 16, die vorzugsweise als mehrstufige und/oder tropffreie Ventile ausgeführt sein können, abgefüllt. Zur genauen Mengendosierung der Anteile 7, 7', 7" wiegt eine Wiegevorrichtung 3 den Mischtopf 1 bzw. die Menge des jeweiligen eingebrachten Anteils 7, 7', 7" mit und meldet die entsprechenden Werte an eine Steuer- oder Regelvorrichtung 21 zur Steuerung bzw. Regelung der Dosierventile 16. Die Steuer- oder Regelvorrichtung 21 weist vorzugsweise eine programmierbare Logik auf, in der verschiedene Rezepte für Vormischungen programmiert sind, wobei vorzugsweise zuerst im Verhältnis mengenmäßig große Anteile 7, 7', 7" der Vormischung 4 in den Mischtopf 1 eingebracht werden können. Nach Figur 1 werden für hochgenaue Dosierungen bestimmte oder alle Anteile 7, 7', 7" nacheinander in den Mischtopf 1 eingebracht (Figur 1), oder in Teilen oder vollständig nahezu gleichzeitig (Figur 2) in den Mischtopf 1 eingeführt. In einer möglichen Alternative werden bei der großindustriellen Produktion die Anteile 7, 7', 7" in weiter entfernt, möglicherweise temperierten und/oder gesicherten Vorratsbehältern 6, 6', 6" gelagert und nach Figur 3 über Zuführungsrohre 25, mit darin optionalen Förderpumpen 26, den Dosiervorrichtungen, den gesteuerten oder geregelten Dosierventilen 16 zugeführt. In einer weiteren alternativen Anwendung können Vorratsbehälter 6, 6', 6" einer beherrschbaren Größe während des Austrages der Anteile 7, 7', 7" gewogen werden und über diesen Gewichtsmesswert die Dosierung respektive die Dosierventile 16 gesteuert werden. Dies ist vorzugsweise bei dem Verfahren und der Anlage nach Figur 2 möglich, in dem mehrere Anteile 7, 7', 7" gleichzeitig eingeführt werden können oder sollen. Diese Möglichkeit ist beispielsweise notwendig wenn eine hohe Taktrate für herzustellende Vormischungen 4' gefordert wird. In einem besonderen Ausführungsbeispiel ist eine Kombination dieser Möglichkeit sinnvoll, in der vorzugsweise größere Mengen bzw. leichter dosierbare große Volumina der Anteile 6, 6', 6" gleichzeitig eingebracht werden und mengenmäßig kleinere Komponenten nacheinander und jedes Mal einzeln dosiert und gemessen werden mittels der Wiegevorrichtung 3 am Mischtopf 1.

Gleichzeitig oder nach Abschluss der Einbringung aller Anteile 7, 7', 7" wird mittels einer Rührvorrichtung 17 der Inhalt des Mischtopfes 1 für eine angemessene Vermischung durchmischt. Nach Vermischung aller sorgsam eingebrachten Anteile 7, 7', 7" entsteht somit eine Vormischung 4, die anschließend über ein Dosierventil 23 am Boden des Mischtopfes 1 in den Dosierbehälter 2 überführt wird. Dabei wird die Menge der Vormischung 4 über eine zweite Wiegevorrichtung 5 kontrolliert und das Dosierventil vorzugsweise über eine zweite Steuer- oder Regelvorrichtung 22 gesteuert oder geregelt. Während in dem geleerten Mischtopf 1 wieder mit der Herstellung einer neuen Vormischung 4' begonnen wird, kann die in dem Dosierbehälter 2 vorhandene Menge an Vormischung 4 kontinuierlich über eine Förderpumpe 8 einem Extruder 13 zugeführt werden.

Der Vorteil des Verfahrens und der ersten beiden Anlagenbereiche besteht darin, dass eine taktweise herstellbare und damit genau dosierbare Vormischung 4 in einen kontinuierlichen Arbeitsprozess überführt wird, der kontinuierlich eine Vormischung 4 einem Extruder 13 zuführt. Gleichzeitig wird es ermöglicht die anderen Anteile wie Füllstoffe 11 und/oder Eindickmittel 20 optimal und ebenso kontinuierlich einem Extruder 13, bei Verwendung eines Mehrextrudersystems, mehreren Extrudern 13, 13', nacheinander zuzuführen.

Die Geschwindigkeit bzw. die Menge an Vormischung 4 zu den anderen beizufügenden Komponenten wird bestimmt durch das gewünschte Verhältnis innerhalb des herzustellenden Harz-Füllstoffgemisches 9, 9' zueinander. Die hierzu notwendigen Steuer- oder Regelungsvorgänge können durch die zweite Steuer- oder Regelvorrichtung 22 oder eine weitere Steuer- oder Regelvorrichtung (nicht dargestellt) synchronisiert werden.

Es wird deutlich, dass hierzu umfangreiche Steuerungs- und/oder Regelungstätigkeiten durchzuführen sind, damit die einzelnen Komponenten optimal zueinander abgestimmt in den Extruder 13 und ggf. bei einem Mehrextrudersystem entsprechend in den oder die nachfolgenden Extruder 13' einlaufen.

Wahlweise können während der Übergabe der Vormischung 4 zur Verstärkung Fasern 10, als Kurz- und/oder Langfasern bzw. Glasfasern, in den Extruder 13 eingebracht werden oder die Fasern 10' werden erst nach einer vollständigen und optimalen Durchmischung des Harz-Füllstoffgemisches 9 entsprechend dosiert in einem weiteren Extruder 13' zur Herstellung eines Harz-Füllstoffgemisches 9' eingeführt. Hervorzuheben ist, dass die Zufuhr der einzelnen Komponenten des Harz-Füllstoffgemisches 9, 9' in den Extruder 13, 13' zueinander im jeweiligen einstellbaren Verhältnis erfolgen sollte, die technologisch durch den Anwendungsfall, bzw. durch den späteren Verwendungszweck des Harz-Füllstoffgemisches 9, 9', vorgegeben ist. Je nach Bedarf kann bei einem SMC-Direktverfahren nach dem ersten oder dem zweiten Extruder 13, 13' das faserverstärkte Harz-Füllstoffgemisch 9, 9' zur weiteren Verwendung überführt werden und beispielsweise über eine Düse ausgetragen werden. Nach einem ggf. notwendigen Zuschnitt kann anschließend das faserverstärkte Harz-Füllstoffgemisch 9, 9' in einer Presse 19 zu einem Kunststoff-Formteil 18 verpresst werden oder es wird entsprechend den Möglichkeiten bis zur Verwendung eingelagert.

Die genaue Dosierung der Vormischung 4 gegenüber den anderen Komponenten, wie Füllstoffe 11 und/oder Eindickmittel 20 ist nun vereinfacht, da größere Mengen an zu dosierenden Stoffen zueinander heutzutage ohne Probleme mit geeigneten Fördermitteln (Dosierpumpen) dosiert werden können. Die Dosierung von den Kleinstmengen an Zuschlagstoffen eines Harzes, respektive innerhalb der Vormischung 4, wurde in einen taktweise arbeitenden, einfach regelbaren und nachprüfbaren Arbeitsschritt ausgelagert und ist nun ohne weiteres sogar bis auf die Zugabe von hochviskosen und/oder kleinsten Mengen optimal beherrschbar.

Der Austrag aus dem Dosierbehälter 2 in den Extruder 13 kann dabei volumetrisch oder gravimetrisch über eine weitere oder über die zweite Steuer- oder Regelvorrichtung 22 gesteuert oder geregelt werden, die vorzugsweise ebenfalls eine programmierbare Logik aufweist.

In Figur 3 ist erkennbar, dass zur Zuleitung der Anteile 7, 7', 7" über die Dosierventile 16 in den Zuführungsrohren 25 von den Vorratsbehältern 6, 6', 6"... Förderpumpen 26 angeordnet sind. Alternativ oder zusätzlich können zur Dosierung der Anteile 7, 7', 7"... die Vorratsbehälter 6, 6', 6"... in ihrer hydrostatischen Höhe oberhalb des Mischtopfes 1 angeordnet sein. In beiden oder im Kombinationsfall ergibt sich ein Vordruck an den Dosierventilen 16, der vorzugsweise ausreichend für einen optimierte und beherrschbare Geschwindigkeit der Anteile 7, 7', 7" durch die Dosierventile 16 vorgesehen ist. Damit ergibt sich eine Reduzierung der Bauteile bzw. Vorrichtungen und es treten weniger Druckschwankungen in den Leitungen bzw. in den Vorratsbehältern 6, 6', 6" auf.

Zur Definition der Begrifflichkeiten ist festzuhalten, dass nicht unbedingt nur Füllstoffe in den Extruder 13, 13' eingeführt werden, sondern dass auch andere Komponenten (wie Harze, Zuschlagstoffe oder dergleichen) in den Extruder 13, 13' eingeführt werden können. Im Übrigen besteht eine Vormischung 4, 4' beispielsweise aus zumindest einem Harz, zumindest einem Härter, zumindest einem Entlüfter, zumindest einem Inhibitor und/oder zumindest einem Additiv. Füllstoffe 11 sind beispielsweise Kreide, Holzstaub oder ähnliche Materialien die das Volumen der Vormischung 4, 4' wesentlich erhöhen, diese sollen erst im Extruder 13, 13' eingebracht werden, können aber zur besseren Handhabung der Vormischung 4, 4' zur Erhöhung des Volumens der Vormischung auch bereits zumindest in Teilen in den Mischtopf 1 eingebracht werden.

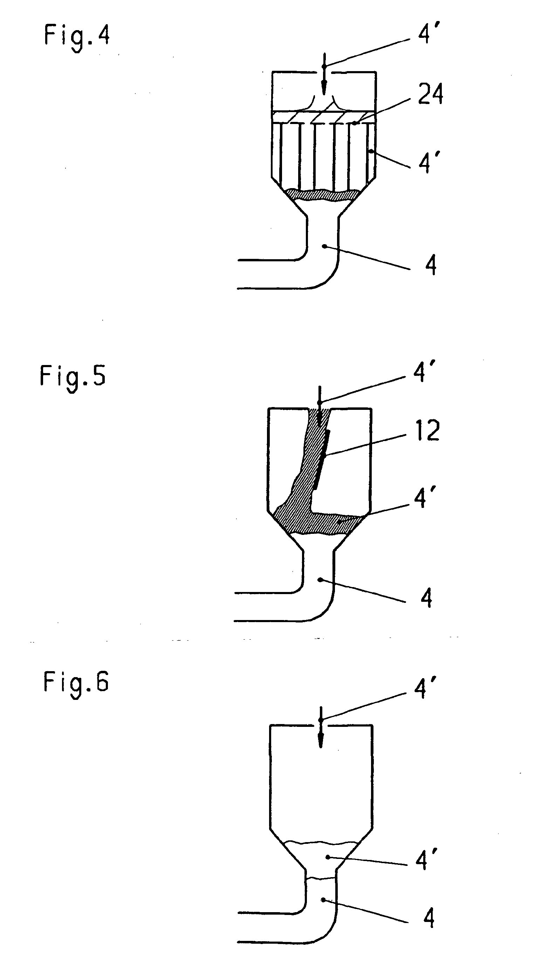

Nach den Figur 4 bis 6 wird vorzugsweise vor der, während der oder nach der vollständigen Leerung des Dosierbehälters 2 eine neu fertig gestellte Vormischung 4' aus dem Mischtopf 1 in den Dosierbehälter 2 eingebracht. Dies kann ebenso dazu benutzt werden, um eine geänderte Vormischung 4' in den Prozess einzuführen. Vorzugsweise kann diese anders gefärbt werden, um etwaigem Bedienpersonal die Ankunft der neuen Vormischung 4' anzuzeigen. Vorzugsweise wird während der Überleitung der Vormischung 4 vom Mischtopf 1 in den Dosierbehälter 2 die Entnahme der Vormischung 4 aus dem Dosierbehälter 2 mittels der Dosierpumpe 8 für diesen Zeitraum auf eine volumetrische Dosierung umgestellt. Alternativ kann während der Überleitung der Vormischung 4 vom Mischtopf 1 in den Dosierbehälter 2 die Entnahme der Vormischung 4 aus dem Dosierbehälter 2 für diesen Zeitraum die Dosierpumpe 8 hinsichtlich der Fördermenge auf einen Mittelwert eines vorhergehenden Zeitraums eingestellt werden.

Bei der Überleitung einer weiteren Vormischung 4' vom Mischtopf 1 in den Dosierbehälter 2, im besonderen bei einer Änderung des Mischungsverhältnisses der Anteile 7, 7', 7" zueinander und/oder der Zugabe neuer und/oder anderer Anteile 7, 7', 7" sollte diese so durchgeführt werden, dass im wesentlichen keine Vermischung mit der noch im Dosierbehälter 2 befindlichen älteren Vormischung 4 erfolgt.

Es ist nachvollziehbar, dass bei einer gleichen Rezeptur der Vormischung 4 zur Vormischung 4' der Dosierbehälter 2 nicht notwendigerweise leer oder fast leer gefahren werden muss, sondern dass in einer bevorzugten Ausführungsform und bei gleichen Rezepturen auch entsprechend schneller der Dosierbehälter 2 nachgefüllt werden kann.

Um eine Vermischung der verschiedenen Vormischungen 4 und 4' zu vermeiden können Trennmittel im Dosierbehälter 2 vorgesehen sein, wie ein Sieb 24 nach Figur 4 oder ein Prallblech 12 nach Figur 5. Die Trennmittel verhindern ein zu schnelles Einfließen der Vormischung 4' in den Dosierbehälter 2 und damit eine entsprechende Vermischung der beiden Vormischungen 4 und 4'.

Der Zeitpunkt der Übergabe einer neuen Vormischung 4' vom Mischtopf 1 in den Dosierbehälter 2 erfolgt vorzugsweise abhängig vom einem Wert einer Füllstandmessung bzw. der Menge der noch im Dosierbehälter 2 vorhandenen Menge der älteren Vormischung 4. Die Füllstandsmessung kann vorzugsweise über die zweite Wiegevorrichtung 5 und/oder mit einer Ultraschallmessung (nicht dargestellt) und/oder mit einem hydrostatischen Sensor (nicht dargestellt) erfolgen. Der Zeitpunkt der Übergabe kann auch über die tatsächlich ausgegebene Menge der Vormischung 4 ermittelt werden, die beispielsweise die zweite Steuer- oder Regelvorrichtung 22 errechnet oder ermittelt. Dies kann beispielsweise über die tatsächliche geförderte Menge der Förderpumpe 8 ermittelt werden. Nach Figur 6 kann eine nachfolgende Vormischung 4' auch erst dann in den Dosierbehälter 2 eingetragen werden, wenn der Füllstand der älteren Vormischung 4 bereits am untersten Ende, vorzugsweise in einem konusförmigen Bereich, des Dosierbehälters oder in der Weiterführenden Leitung angelangt ist. Möglicherweise sind in der weiterführenden Leitung Mittel zur Entlüftung vorgesehen, die allerdings bei einem gravimetrischen Austrag eher nicht notwendig sind.

### Bezugszeichenliste: DP1370EP

1. Mischtopf zur Erzeugung einer Vormischung 4, 4'
2. Dosierbehälter
3. Wiegevorrichtung
4. Vormischung
5. zweite Wiegevorrichtung
6. Vorratsbehälter
7. Anteil (der Vormischung 4)
8. Förderpumpe
9. Harz-Füllstoffgemisch
10. Fasern
11. Füllstoff
12. Prallblech
13. Extruder
14. Ständer
15. Revolverdrehvorrichtung
16. Dosierventil
17. Rührvorrichtung
18. Kunststoff-Formteile
19. Presse
20. Eindickmittel
21. Steuer- oder Regelvorrichtung für 1
22. Steuer- oder Regelvorrichtung für 2
23. Dosierventil
24. Sieb
25. Zuführungsrohr
26. Förderpumpen

## Patentansprüche

1. Verfahren zur taktweisen Herstellung und kontinuierlichen Bereitstellung eines Harz-Füllstoffgemisches (9, 9') im Zuge der Produktion von Kunststoff-Formteilen (18) mit oder ohne Fasern (10) zur Verstärkung, wobei zumindest Anteile (7, 7', 7"...) des Harzes als eine Vormischung (4, 4') vorgemischt und zusammen mit einem Füllstoff (11) und mit oder ohne Fasern (10) in zumindest einem Extruder (13, 13') zu einem Harz-Füllstoffgemisch (9, 9') homogenisiert werden,
mit folgenden Merkmalen:
**a.)** die einzelnen Anteile (7, 7', 7"...) einer festgelegten Vormischung (4, 4') werden unter einem Vordruck über Dosierventile (16) aus verschiedenen Vorratsbehältern (6, 6', 6"...) gravimetrisch geregelt in einen Mischtopf (1) zur Erzeugung einer Vormischung (4, 4') eindosiert,
**b.)** wobei während der gravimetrisch geregelten Eindosierung der einzelnen Anteile (7, 7', 7"...) eine am Mischtopf (1) angebrachte Wiegevorrichtung (3) und eine damit verbundene Steuer- oder Regelvorrichtung (21) die Menge jedes einzelnen Anteiles (7, 7', 7"...) der Vormischung (4, 4') einstellt und/oder kontrolliert,
**c.)** wobei anschließend oder gleichzeitig die einzelnen eingebrachten Anteile (7, 7', 7"...) im Mischtopf (1) mit einer Rührvorrichtung (17) zu einer Vormischung (4, 4') vermischt werden
**d.)** und diese Vormischung (4, 4') nach ausreichender Vermischung taktweise an einen Dosierbehälter (2) übergeben wird,
e.) und der Dosierbehälter (2) während der vorhergehenden Verfahrensschritte über eine am Dosierbehälter (2) angebrachte zweite Wiegevorrichtung (5) und eine zugehörige zweite Steuer- oder Regelvorrichtung (22) und eine Förderpumpe (8) die Vormischung (4) kontinuierlich dosiert zumindest einem Extruder (13, 13') zur Erstellung eines Harz-Füllstoffgemisches (9, 9') zuführt,
f.) wobei während der kontinuierlichen Übergabe der Vormischung (4) an den Extruder (13, 13') im Mischtopf (1) eine weitere Vormischung (4') hergestellt wird,
g.) wobei die kontinuierliche Förderung aus dem Dosierbehälter (2) in den Extruder (13, 13') gravimetrisch oder volumetrisch gesteuert oder geregelt erfolgt,
h.) und wobei während der taktweisen Überleitung der Vormischung (4, 4') vom Mischtopf (1) in den Dosierbehälter (2) die kontinuierliche Entnahme der Vormischung (4, 4') aus dem Dosierbehälter (2) mittels der Förderpumpe (8) für diesen Zeitraum auf eine volumetrische Dosierung umgestellt wird.

2. Verfahren nach Anspruch 1, **dadurch gekennzeichnet, dass** der Vordruck der einzelnen Anteile (7, 7', 7"...) an den Dosierventilen (16) über Förderpumpen (26) und/oder über gegenüber den Dosierventilen (16) hydrostatisch höher gelegenen Vorratsbehältern (6, 6', 6"...) aufgebracht wird.

3. Verfahren nach Anspruch 1 oder 2, **dadurch gekennzeichnet, dass** die einzelnen Anteile (7, 7', 7"...) der Vormischung (4, 4') im Mischtopf (1) zumindest teilweise gleichzeitig, nacheinander und/oder in vorgegebener Reihenfolge zugeführt werden.

4. Verfahren nach einem oder mehrere der vorhergehenden Ansprüche, **dadur ch gekennzeichnet, dass** während der taktweisen Überleitung der Vormischung (4) vom Mischtopf (1) in den Dosierbehälter (2) die kontinuierliche Entnahme der Vormischung (4) aus dem Dosierbehälter (2) mittels der Förderpumpe (8) für diesen Zeitraum die Förderpumpe (8) hinsichtlich der Fördermenge auf einen Mittelwert eines vorhergehenden Zeitraums eingestellt wird.

5. Verfahren nach einem oder mehrere der vorherigen Ansprüche, **dadurch g ekennzeichnet, dass** die Vormischung (4) kontinuierlich in einen Extruder (13) überführt und der Füllstoff (11) und/oder ein Eindickmittel (20) entsprechend mengen- oder gewichtsmäßiger Verhältnisvorgaben zugeführt wird.

6. Verfahren nach einem oder mehrere der vorhergehenden Ansprüche, **dadur ch gekennzeichnet, dass** in einem ersten Extruder (13) oder in einen weiteren zweiten Extruder (13') Fasern (10) als Kurz- und/oder Langfasern kontinuierlich zugeführt werden.

7. Verfahren nach einem oder mehrere der vorhergehenden Ansprüche, **dadur ch gekennzeichnet, dass** eine taktweise Überleitung einer weiteren Vormischung (4') vom Mischtopf (1) in den Dosierbehälter (2), im besonderen bei einer Änderung des Mischungsverhältnisses der einzelnen Anteile (7, 7', 7" ...) zueinander und/oder der Zugabe neuer und/oder anderer Anteile (7, 7', 7" ...), mit einem Trennmittel (12; 24) so durchgeführt wird, dass im wesentlichen keine Vermischung mit der noch im Dosierbehälter (2) befindlichen älteren Vormischung (4) erfolgt.

8. Verfahren nach einem oder mehrere der vorhergehenden Ansprüche, **dadur ch gekennzeichnet, dass** der Zeitpunkt der taktweisen Übergabe einer neuen Vormischung (4') vom Mischtopf (1) in den Dosierbehälter (2) abhängig vom Wert einer Füllstandmessung und/oder einer gemessenen tatsächlichen Abgabemenge der älteren Vormischung (4) im Dosierbehälter (2) erfolgt.

9. Verfahren nach Anspruch 8, **dadurch gekennzeichnet, dass** die Füllstandsmessung über die Wiegevorrichtung (5) und/oder mit einer Ultraschallmessung und/oder mit einem hydrostatischen Sensor erfolgt und/oder die zweite Steuer- oder Regelungsvorrichtung (22) die tatsächlich geförderten Menge der älteren Vormischung (4) erkennt oder errechnet.

10. Verfahren nach einem oder mehrere der vorhergehenden Ansprüche,
**dadurch gekennzeichnet, dass** zuerst die mengenmäßig großen Anteile (7, 7', 7"...) der Vormischung (4) in den Mischbehälter (1) eindosiert werden, bevor mengenmäßig kleinere oder sehr geringe Anteile (7, 7', 7"...) in den Mischbehälter (1) eindosiert werden.

11. Verfahren nach einem oder mehrere der vorhergehenden Ansprüche,
**dadurch gekennzeichnet, dass** die einzelnen Anteile (7, 7', 7"...) der Vormischung (4) mittels Förderpumpen (26) aus den Vorratsbehältern (6, 6', 6"...) ausgetragen und den Dosierventilen (16) zugeführt werden.

12. Verfahren nach einem oder mehrere der vorhergehenden Ansprüche,
**dadurch gekennzeichnet, dass** als Dosierventile (16) mehrstufige und/oder tropffreie Ventile verwendet werden.

13. Anlage zur taktweisen Herstellung und kontinuierlichen Bereitstellung eines Harz-Füllstoffgemischs (9, 9') im Zuge der Produktion von Kunststoff-Formteilen (18) mit oder ohne Fasern (10) zur Verstärkung, wobei zumindest Anteile (7, 7', 7"...) des Harzes als eine Vormischung (4, 4') vorgemischt und zusammen mit einem Füllstoff (11) und mit oder ohne Fasern (10) in zumindest einem Extruder (13, 13') zu einem Harz-Füllstoffgemisch (9, 9') homogenisiert werden,
wobei
**a.)** zu einer gravimetrisch geregelten Eindosierung der unter einem Vordruck stehenden einzelnen Anteile (7, 7', 7"...) einer festgelegten Vormischung (4, 4') in einen Mischtopf (1) zur Erzeugung einer Vormischung (4, 4') aus verschiedenen Vorratsbehältern (6, 6', 6"...) Dosierventile (16) angeordnet sind,
**b.)** zur gravimetrisch geregelten Eindosierung der einzelnen Anteile (7, 7', 7") eine Wiegevorrichtung (3) für den Mischtopf (1) und eine damit verbundene Steuer- oder Regelvorrichtung (21) zur Einstellung und/oder Kontrolle der Menge jedes einzelnen Anteiles (7, 7', 7"...) über die Dosierventile (16) angeordnet ist,
**c.)** zur Vermischung der einzelnen eingebrachten Anteile (7, 7', 7"...) im Mischtopf (1) eine Rührvorrichtung (17) angebracht ist,
**d.)** zur taktweisen und direkten Übergabe der Vormischung (4) in einen Dosierbehälter (2) ein Dosierventil (23) am Mischtopf (1) angeordnet ist,
e.) und zur Steuerung oder Regelung der kontinuierlichen Abgabe der Vormischung (4) aus dem Dosierbehälter (2) für zumindest einen Extruder (13, 13') zur Erstellung eines Harz-Füllstoffgemisches (9, 9') eine Förderpumpe (8), eine zweite Wiegevorrichtung (5) und eine zugehörige zweite Steuer- oder Regelvorrichtung (22) angeordnet ist;
wobei die Anlage darüber hinaus dergestalt eingerichtet ist,
**f.)** dass während der kontinuierlichen Übergabe der Vormischung (4) an den Extruder (13, 13') im Mischtopf (1) eine weitere Vormischung (4') hergestellt wird,
**g.)** dass die kontinuierliche Förderung aus dem Dosierbehälter (2) in den Extruder (13, 13') gravimetrisch oder volumetrisch gesteuert oder geregelt erfolgt,
**h.)** und dass während der taktweisen Überleitung der Vormischung (4, 4') vom Mischtopf (1) in den Dosierbehälter (2) die kontinuierliche Entnahme der Vormischung (4, 4') aus dem Dosierbehälter (2) mittels der Förderpumpe (8) für diesen Zeitraum auf eine volumetrische Dosierung umgestellt wird.

14. Anlage nach Anspruch 13, **dadurch gekennzeichnet, dass** im Bereich der Eingangsöffnung des Extruders (13, 13') Mittel zur kontrollierten Zugabe zumindest von Füllstoff (11) und/oder eines Eindickmittels (20) und/oder anderer Komponenten entsprechend mengen- oder gewichtsmäßiger Verhältnisvorgaben angeordnet sind.

15. Anlage nach Anspruch 13 oder 14, **dadurch gekennzeichnet, dass** Mittel zur kontrollierten Zufuhr von Fasern (10) als Kurz- und/oder Langfasern an dem ersten (13) oder an einem weiteren zweiten Extruder (13) angeordnet sind.

16. Anlage nach einem oder mehrere der vorhergehenden Ansprüche 13 bis 15, **dadurch gekennzeichnet, dass** für einen Vordruck zur Dosierung der einzelnen Anteile (7, 7', 7"...) an den Dosierventilen (16) in den Zuführungsrohren (25) von den Vorratsbehältern (6, 6', 6"...) Förderpumpen (26) und/oder die Vorratsbehältern (6, 6', 6"...) in ihrer hydrostatischen Höhe oberhalb des Mischtopfes (1) und/oder der Dosierventile (16) angeordnet sind.

17. Anlage nach einem oder mehrere der vorhergehenden Ansprüche 13 bis 16, **dadurch gekennzeichnet, dass** als Dosierventile (16) an den Vorratsbehältern (6, 6', 6"...) zumindest zwei- oder mehrstufige und/oder tropffreie Ventile angeordnet sind.

18. Anlage nach einem oder mehrere der vorhergehenden Ansprüche 13 bis 17, **dadurch gekennzeichnet, dass** in den Steuer- oder Regelvorrichtungen (21, 22) eine modifizierbare Logik angeordnet ist.

19. Anlage nach einem oder mehrere der vorhergehenden Ansprüche 13 bis 18, **dadurch gekennzeichnet, dass** in dem Dosierbehälter (2) zur Vermeidung einer Vermischung einer neuen Vormischung (4') mit einer älteren Vormischung (4) Trennmittel (12; 24) vorgesehen sind.

20. Anlage nach Anspruch 19, **dadurch gekennzeichnet, dass** die Trennmittel als Prallblech (12) oder als Sieb (24) ausgeführt sind.

## Claims

1. A method for the cyclic production and continuous provision of a resin-filler mixture (9, 9') in the course of producing plastic moulded parts (18) with or without fibres (10) for reinforcing, wherein at least fractions (7, 7', 7" ...) of the resin are pre-mixed as a pre-mixture (4, 4') and homogenised together with a filler (11) and with or without fibres (10) in at least one extruder (13, 13') into a resin-filler mixture (9, 9'), having the following features:
a) the individual fractions (7, 7', 7" ...) of a determined pre-mixture (4, 4') are dosed in a gravimetrically controlled manner into a mixing container (1) for producing a pre-mixture (4, 4') under an admission pressure via dosing valves (16) from various storage containers (6, 6', 6" ...),
b) wherein a weighing apparatus (3) attached to the mixing container (1) and an open-loop or closed loop control apparatus (21) connected to said container sets and/or controls the quantity of every single fraction (7, 7', 7" ...) of the pre-mixture (4, 4') during the gravimetrically controlled dosing of the individual fractions (7, 7', 7" ...),
c) wherein subsequently or simultaneously the individual introduced fractions (7, 7', 7" ...) in the mixing container (1) are mixed with a stirring apparatus (17) into a pre-mixture (4, 4'),
d) and said pre-mixture (4, 4') is transferred in a cyclic fashion to a dosing container (2) after sufficient pre-mixing,
e) and the dosing container (2) continuously supplies the pre-mixture (4) in a continuously dosed fashion at least to an extruder (13, 13') for producing a resin-filler mixture (9, 9') during the preceding method steps via a second weighing apparatus (5) attached to the dosing container (2) and an associated second open-loop or close loop control apparatus (22) and a feed pump (8),
f) wherein a further pre-mixture (4') is produced in the mixing container (1) during the continuous transfer of the pre-mixture (4) to the extruder (13, 13'),
g) wherein the continuous conveying from the dosing container (2) to the extruder (13, 13') occurs in a gravimetrically or volumetrically controlled or regulated manner,
h) and wherein the continuous extraction of the pre-mixture (4, 4') from the dosing container (2) is changed over by means of the feed pump (8) for this period to volumetric dosing during the cyclic transfer of the pre-mixture (4, 4') from the mixing container (1) to the dosing container (2).

2. A method according to claim 1, **characterized in that** the admission pressure of the individual fractions (7, 7', 7" ...) on the dosing valves (16) is applied via feed pumps (26) and/or via storage containers (6, 6', 6" ...) which are hydrostatically situated at a higher altitude in relation to the dosing valves (16).

3. A method according to claim 1 or 2, **characterized in that** the individual fractions (7, 7', 7" ...) of the pre-mixture (4, 4') in the mixing container (1) are supplied at least partly simultaneously, successively and/or in a predetermined sequence.

4. A method according to one or several of the preceding claims, **characterized in that** during the cyclic transfer of the pre-mixture (4) from the mixing container (1) to the dosing container (2) and for the continuous extraction of the pre-mixture (4) from the dosing container (2) by means of the feed pump (8) for this period the feed pump (8) is set to a mean value of a preceding period concerning the conveyed quantity.

5. A method according to one or several of the preceding claims, **characterized in that** the pre-mixture (4) is transferred continuously to an extruder (13) and the filler (11) and/or a thickening agent (20) is supplied according to default ratios with respect to quantity and weight.

6. A method according to one or several of the preceding claims, **characterized in that** fibres (10) are supplied as short and/or long fibres in a continuous fashion to a first extruder (13) or a further second extruder (13').

7. A method according to one or several of the preceding claims, **characterized in that** especially during a change in the mixing ratio of the individual fractions (7, 7', 7" ...) with respect to each other and/or the addition of new and/or other fractions (7, 7', 7" ...) a cyclic transfer of a further pre-mixture (4') from the mixing container (1) to the dosing container (2) is carried out with a separating means (12; 24) in such a way that substantially no mixing occurs with the older pre-mixture (4) still situated in the dosing container (2).

8. A method according to one or several of the preceding claims, **characterized in that** the point in time of the cyclic transfer of a new pre-mixture (4') from the mixing container (1) to the dosing container (2) occurs dependent on the value of a filling level measurement and/or a measured actual delivery quantity of the older pre-mixture (4) in the dosing container (2).

9. A method according to claim 8, **characterized in that** the filling level measurement occurs via the weighing apparatus (5) and/or with ultrasonic measurement and/or with a hydrostatic sensor, and/or the second open-loop or closed-loop control apparatus (22) recognises or calculates the actually conveyed quantity of the older pre-mixture (4).

10. A method according to one or several of the preceding claims, **characterized in that** the fractions (7, 7', 7" ...) of the pre-mixture (4) which are large with respect to quantity are dosed to the mixing container (1) before fractions (7, 7', 7" ...) which are very small or very low with respect to quantity are dosed to the mixing container (1).

11. A method according to one or several of the preceding claims, **characterized in that** the individual fractions (7, 7', 7" ...) of the pre-mixture (4) are extracted from the storage containers (6, 6', 6" ...) by means of feed pumps (26) and are supplied to the dosing valves (16).

12. A method according to one or several of the preceding claims, **characterized in that** multi-step and/or dripless valves are used as dosing valves (16).

13. An installation for the cyclic production and continuous provision of a resin-filler mixture (9, 9') in the course of producing plastic moulded parts (18) with or without fibres (10) for reinforcing, wherein at least fractions (7, 7', 7" ...) of the resin are pre-mixed as a pre-mixture (4, 4') and homogenised together with a filler (11) and with or without fibres (10) in at least one extruder (13, 13') into a resin-filler mixture (9, 9'), wherein:
a) dosing valves (16) are arranged for producing a pre-mixture (4, 4') from various storage containers (6, 6', 6" ...) for the purpose of gravimetrically controlled dosing of the individual fractions (7, 7', 7" ...) of a determined pre-mixture (4, 4') under admission pressure into a mixing container (1),
b) for the gravimetrically controlled dosing of the individual fractions (7, 7', 7" ...) a weighing apparatus (3) is arranged for the mixing container (1) and an open-loop or closed-loop control apparatus (21) connected thereto for setting and/or controlling the quantity of every single fraction (7, 7', 7" ...) via the dosing valves (16),
c) a stirring apparatus (17) is attached for mixing the individual introduced fractions (7, 7', 7" ...) in the mixing container (1),
d) a dosing valve (23) is arranged on the mixing container (1) for the cyclic and direct transfer of the pre-mixture (4) to a dosing container (2),
e) a feed pump (8), a second weighing apparatus (5) and an associated second open-loop or closed-loop control apparatus (22) are arranged for the open-loop or closed-loop control of the continuous delivery of the pre-mixture (4) from the dosing container (2) for at least one extruder (13, 13') for producing a resin-filler mixture (9, 9'), wherein the installation is further set up in such a way
f) that during the continuous transfer of the pre-mixture (4) to the extruder (13, 13') a further pre-mixture (4') is produced in the mixing container (1),
g) that the continuous conveyance from the dosing container (2) to the extruder (13, 13') occurs in a gravimetrically or volumetrically controlled and regulated manner,
h) and that during the cyclic transfer of the pre-mixture (4, 4') from the mixing container (1) to the dosing container (2) the continuous extraction of the pre-mixture (4, 4') from the dosing container (2) by means of the feed pump (8) is changed over to volumetric dosing for this period.

14. An installation according to claim 13, **characterized in that** means for the controlled feeding of at least one filler (11) and/or a thickening agent (20) and/or other components according to default ratios with respect to quantity or weight are arranged in the region of the input openings of the extruder (13, 13').

15. An installation according to claim 13 or 14, **characterized in that** means for the controlled supply of fibres (10) as short and/or long fibres are arranged on the first (13) or a further second extruder (13').

16. An installation according to one or several of the preceding claims 13 to 15, **characterized in that** feed pumps (26) and/or storage containers (6, 6', 6" ...) arranged with respect to their hydrostatic altitude above the mixing container and/or the dosing valves (16) are provided for an admission pressure for dosing the individual fractions (7, 7', 7" ...) in the dosing valves (16) in the feed pipes (25) from the storage containers (6, 6', 6" ...).

17. An installation according to one or several of the preceding claims 13 to 16, **characterized in that** at least two-step or multi-step and/or dripless valves are arranged as dosing valves (16) on the storage containers (6, 6', 6" ...).

18. An installation according to one or several of the preceding claims 13 to 17, **characterized in that** a modifiable logic is arranged in the open-loop or closed-loop control apparatuses (21, 22).

19. An installation according to one or several of the preceding claims 13 to 18, **characterized in that** separating means (12; 24) are provided in the dosing container (2) for preventing the mixing of a new pre-mixture (4') with an older pre-mixture (4).

20. An installation according to claim 19, **characterized in that** the separating means are arranged as a baffle plate (12) or a screen (24).

## Revendications

1. Procédé pour la fabrication discontinue et la fourniture en continu d'un mélange de remplissage à base de résine (9, 9') au cours de la production de pièces moulées en plastique (18) avec ou sans fibres (10) de renfort, dans lequel des portions (7, 7', 7"...) au moins de la résine sont prémélangées sous la forme d'un prémélange (4, 4') et homogénéisées avec une charge de remplissage (11) et avec ou sans fibres (10) dans au moins une extrudeuse (13, 13') pour donner un mélange de résine et de charge de remplissage (9, 9'), présentant les caractéristiques suivantes:
a) les différentes portions (7, 7', 7"...) d'un prémélange (4, 4') défini sont dosées à l'aide de vannes de dosage (16) sous une pression d'amont à partir de différents réservoirs de réserve (6, 6', 6"...) dans une cuve de mélange (1), avec une régulation gravimétrique, pour produire un prémélange (4, 4'),
b) un dispositif de pesage (3) installé sur la cuve de mélange (1) et un dispositif de commande et de régulation (21) relié à celui-ci réglant et/ou contrôlant la quantité de chaque portion (7, 7', 7"...) du prémélange (4, 4') pendant le dosage régulé par gravimétrie des différentes portions (7, 7', 7"...),
c) les portions (7, 7', 7"...) apportées séparément étant ensuite ou simultanément mélangées dans la cuve de mélange (1) à l'aide d'un dispositif agitateur (17) pour former un prémélange (4, 4')
d) et ce prémélange (4, 4') étant transféré de façon discontinue vers un réservoir de dosage (2) une fois qu'il est suffisamment mélangé,
e) et le réservoir de dosage (2) amenant le prémélange (4) en le dosant en continu, pendant les étapes de procédé ci-dessus, à au moins une extrudeuse (13, 13'), à l'aide d'un deuxième dispositif de pesage (5) installé sur le réservoir de dosage (2) et d'un deuxième dispositif de commande ou de régulation (22) correspondant et d'une pompe de circulation (8), pour produire un mélange de résine et de charge de remplissage (9, 9'),
f) un autre prémélange (4') étant fabriqué dans la cuve de mélange (1) pendant le transfert en continu du prémélange (4) vers l'extrudeuse (13, 13'),
g) le transport en continu du réservoir de dosage (2) à l'extrudeuse (13, 13') étant contrôlé ou régulé par gravimétrie ou volumétrie,
h) et le prélèvement continu du prémélange (4, 4') hors du réservoir de dosage (2) au moyen de la pompe de circulation (8) étant réglé sur un dosage volumétrique pendant la durée du transfert discontinu du prémélange (4, 4') de la cuve de mélange (1) au réservoir de dosage (2).

2. Procédé selon la revendication 1, **caractérisé en ce que** la pression d'amont des différentes portions (7, 7', 7"...) au niveau des vannes de dosage (16) est appliquée par des pompes de circulation (26) et/ou par des réservoirs de réserve (6, 6', 6"...) situés plus haut que les vannes de dosage (16) du point de vue hydrostatique.

3. Procédé selon la revendication 1 ou 2, **caractérisé en ce que** les différentes portions (7, 7', 7"...) du prémélange (4, 4') sont amenées dans la cuve de mélange (1) au moins en partie simultanément, successivement et/ou dans un ordre prédéfini.

4. Procédé selon une ou plusieurs des revendications précédentes, **caractérisé en ce que** pendant le transfert discontinu du prémélange (4) de la cuve de mélange (1) au réservoir de dosage (2), pour le prélèvement continu du prémélange (4) hors du réservoir de dosage (2) au moyen de la pompe de circulation (8), le débit de la pompe de circulation (8) est réglé pendant ce temps à une moyenne sur un intervalle de temps précédent.

5. Procédé selon une ou plusieurs des revendications précédentes, **caractérisé en ce que** le prémélange (4) est transféré en continu dans une extrudeuse (13) et la charge de remplissage (11) et/ou un épaississant (20) sont amenés selon des consignes de rapport de quantité ou de poids.

6. Procédé selon une ou plusieurs des revendications précédentes, **caractérisé en ce que** dans une première extrudeuse (13) ou dans une autre deuxième extrudeuse (13'), des fibres (10) courtes et/ou longues sont amenées en continu.

7. Procédé selon une ou plusieurs des revendications précédentes, **caractérisé en ce qu'**un transfert discontinu d'un autre prémélange (4') de la cuve de mélange (1) au réservoir de dosage (2) est effectué avec un moyen de séparation (12 ; 24), en particulier lors d'un changement du rapport de mélange des différentes portions (7, 7', 7"...) les unes par rapport aux autres et/ou de l'ajout de nouvelles portions ou d'autres portions (7, 7', 7"...), de telle sorte qu'il n'y ait sensiblement pas de mélange avec le prémélange (4) plus ancien qui se trouve encore dans le réservoir de dosage (2).

8. Procédé selon une ou plusieurs des revendications précédentes, **caractérisé en ce que** le moment du transfert discontinu d'un nouveau prémélange (4') de la cuve de mélange (1) au réservoir de dosage (2) s'effectue en fonction de la valeur d'une mesure du niveau de remplissage et/ou d'une quantité de l'ancien prémélange (4) effectivement délivrée dans le réservoir de dosage (2).

9. Procédé selon la revendication 8, **caractérisé en ce que** la mesure du niveau de remplissage est réalisée par le dispositif de pesage (5) et/ou par une mesure par ultrasons et/ou avec un capteur hydrostatique et/ou le deuxième dispositif de commande ou de régulation (22) reconnaît ou calcule la quantité effectivement délivrée de l'ancien prémélange (4).

10. Procédé selon une ou plusieurs des revendications précédentes, **caractérisé en ce que** les portions (7, 7', 7"...) de grande quantité du prémélange (4) sont dosées les premières dans le récipient de mélange (1) avant que les portions (7, 7', 7"...) de petite ou très petite quantité soient dosées dans le récipient de mélange (1).

11. Procédé selon une ou plusieurs des revendications précédentes, **caractérisé en ce que** les différentes portions (7, 7', 7"...) du prémélange (4) sont extraites des réservoirs de réserve (6, 6', 6"...) et amenées aux vannes de dosage (16) au moyen de pompes de circulation (26).

12. Procédé selon une ou plusieurs des revendications précédentes, **caractérisé en ce que** les vannes de dosage (16) utilisées sont des vannes à plusieurs étages et/ou pare-gouttes.

13. Installation pour la fabrication discontinue et la fourniture en continu d'un mélange de remplissage à base de résine (9, 9') au cours de la production de pièces moulées en plastique (18) avec ou sans fibres (10) de renfort, dans lequel des portions (7, 7', 7"...) au moins de la résine sont prémélangées sous la forme d'un prémélange (4, 4') et homogénéisées avec une charge de remplissage (11) et avec ou sans fibres (10) dans au moins une extrudeuse (13, 13') pour donner un mélange de résine et de charge de remplissage (9, 9'), dans laquelle :
a) des vannes de dosage (16) sont disposées en vue d'un dosage régulé par gravimétrie des différentes portions (7, 7', 7"...) soumises à une pression d'amont d'un prémélange (4, 4') défini dans une cuve de mélange (1) pour produire un prémélange (4, 4') à partir de différents réservoirs de réserve (6, 6', 6"...),
b) un dispositif de pesage (3) est disposé pour la cuve de mélange (1) en vue du dosage régulé par gravimétrie des différentes portions (7, 7', 7") et un dispositif de commande ou de régulation (21) relié à celui-ci pour régler et/ou contrôler chacune des différentes portions (7, 7', 7"...) à l'aide des vannes de dosage (16),
c) un dispositif agitateur (17) est disposé pour mélanger les différentes portions (7, 7', 7"...) apportées dans la cuve de mélange (1),
d) une vanne de dosage (23) est disposée sur la cuve de mélange (1) pour le transfert discontinu et direct du prémélange (4) dans un réservoir de dosage (2),
e) une pompe de circulation (8), un deuxième dispositif de pesage (5) et un deuxième dispositif de commande ou de régulation (22) correspondant sont disposés pour commander ou réguler la fourniture en continu du prémélange (4) du réservoir de dosage (2) à au moins une extrudeuse (13, 13') pour produire un mélange de résine et de charge de remplissage (9, 9'),
l'installation étant en outre aménagée de telle façon que
f) pendant le transfert continu du prémélange (4) vers l'extrudeuse (13, 13'), un autre prémélange (4') est fabriqué dans la cuve de mélange (1),
g) que l'acheminement continu du réservoir de dosage (2) dans l'extrudeuse (13, 13') est commandé ou régulé par gravimétrie ou volumétrie,
h) et que pendant le transfert discontinu du prémélange (4, 4') de la cuve de mélange (1) au réservoir de dosage (2), le prélèvement continu du prémélange (4, 4') hors du réservoir de dosage (2) au moyen de la pompe de circulation (8) est réglé pendant ce temps sur un dosage volumétrique.

14. Installation selon la revendication 13, **caractérisée en ce que** des moyens sont disposés au niveau de l'ouverture d'entrée de l'extrudeuse (13, 13') pour l'ajout contrôlé d'au moins une charge de remplissage (11) et/ou d'un épaississant (20) et/ou d'autres composants selon des consignes de rapport de quantité ou de poids.

15. Installation selon la revendication 13 ou 14, **caractérisée en ce que** des moyens pour l'apport contrôlé de fibres (10) courtes ou longues sont disposés sur la première extrudeuse (13) ou une autre deuxième extrudeuse (13').

16. Installation selon une ou plusieurs des revendications 13 à 15, **caractérisée en ce que** pour une pression d'amont en vue du dosage des différentes portions (7, 7', 7"...) au niveau des vannes de dosage (16), des pompes de circulation (26) sont prévues dans les conduites d'arrivée (25) des réservoirs de réserve (6, 6', 6"...) et/ou les réservoirs de réserve (6, 6', 6"...) sont disposés plus haut que la cuve de mélange (1) et/ou les vannes de dosage (16) du point de vue hydrostatique.

17. Installation selon une ou plusieurs des revendications 13 à 16, **caractérisée en ce que** les vannes de dosage (16) disposées sur les réservoirs de réserve (6, 6', 6"...) sont des vannes à au moins deux ou plusieurs étages et/ou des vannes anti-gouttes.

18. Installation selon une ou plusieurs des revendications 13 à 17, **caractérisée en ce qu'**une logique modifiable est disposée dans les dispositifs de commande ou de régulation (21, 22).

19. Installation selon une ou plusieurs des revendications 13 à 18, **caractérisée en ce que** des moyens de séparation (12 ; 24) sont prévus dans le réservoir de dosage (2) afin d'éviter un mélange d'un nouveau prémélange (4') avec un ancien prémélange (4).

20. Installation selon la revendication 19, **caractérisée en ce que** les moyens de séparation sont réalisées comme une tôle de déflecteur (12) ou un crible (24).
